# FASCICULE DE BREVET EUROPEEN

(11) **EP 3 227 079 B1**
(45) Date de publication et mention de la délivrance du brevet: **08.04.2020**
(21) Numéro de dépôt: 15804806.6
(22) Date de dépôt: 04.12.2015
(51) Int. Cl.: B29C 44/56, B29K 505/00

(54) **PROCÉDÉ DE FABRICATION D'UN ISOLATEUR ET ISOLATEUR**
VERFAHREN ZUR HERSTELLUNG EINER ISOLIERVORRICHTUNG UND ISOLIERVORRICHTUNG
METHOD FOR PRODUCING AN INSULATING DEVICE AND INSULATING DEVICE

(30) Priorité: 05.12.2014 BE 201400834
(43) Date de publication de la demande: 11.10.2017
(73) Titulaire: NMC S.A., 4731 Eynatten (BE)
(72) Inventeur: MAYERES, Jean-Pierre, 4700 Eupen (BE); JOB, Denis, 4031 Angleur (BE); MEESSEN, Silvain, 4840 Welkenraedt (BE)
(74) Mandataire: Office Freylinger
(86) Numéro de dépôt international: PCT/EP2015/078692
(87) Numéro de publication internationale: WO 2016/087654

(56) Documents cités:
- EP-A1- 0 575 771
- EP-A1- 2 423 249
- US-A- 5 977 197
- US-A1- 2012 101 174
- US-A1- 2012 114 895

## Description

### Domaine technique

La présente invention concerne d'une manière générale le domaine de l'isolation thermique et en particulier le domaine des dispositifs de rupture de pont thermique dans la construction relative aux vitrages, portes, éléments de façades, etc.

### Etat de la technique

Dans le domaine de la construction, en particulier dans la construction métallique ou dans le domaine de la fabrication des portes, fenêtres ou parements de façade comprenant notamment des éléments de construction en matières compactes plastiques ou métalliques, il est bien connu qu'il faut prévoir des ruptures de ponts thermiques. En effet, un pont thermique est une zone ponctuelle ou linéaire qui, dans l'enveloppe d'un bâtiment, présentent une augmentation de la conductivité thermique. Il s'agit d'un point de la construction où la barrière isolante est rompue, entrainant non seulement des pertes de chaleur vers l'extérieur, mais également la condensation et donc l'humidité à l'intérieur. Comme les bâtiments sont de plus en plus étanches, le renouvellement de l'air y est limité, et les parois restent humides. Des moisissures et des mauvaises odeurs en résultent pouvant entrainer le développement d'allergies chez certaines personnes.

Actuellement, pour des éléments de constructions ayant tant une face intérieure et une face exposée à l'extérieur, on recourt couramment à des éléments dits rupteurs de pont thermiques. Dans la pratique, un cadre de fenêtre entier peut être fabriqué en une matière peu conductrice de chaleur comme le PVC, ou en métal, c'est-à-dire en un matériau fortement conducteur de chaleur. Le cadre présentera habituellement une face (ou profilé) intérieure, une face (ou profilé) extérieure séparée par des éléments peu conducteurs de chaleurs, par exemple des connecteurs isolants ou isolateurs en matière synthétique.

Ces isolateurs servant à rompre/éviter les ponts thermiques doivent toutefois être suffisamment rigides et solides pour ne pas être déformés ou brisés lors de leur insertion dans le clip de l'élément de structure et par exemple lors du vissage d'une vis de fixation qui les traverse de part en part. Par conséquent, ils se présentent généralement comme des profilés longitudinaux avec des côtés longs munis de sections particulières destinées à se fixer par encliquetage, par emboîtement, par enclenchement, par insertion, etc. dans ou sur des sections de forme sensiblement complémentaire de l'un des profilés ou éléments de construction. De plus, ils sont fabriqués en une matière synthétique solide, notamment le PVC, le PP, etc. Outre les raisons sanitaires de réduire les effets des ponts thermiques, les exigences en matière de performance énergétique des bâtiments sont en continuelle croissance.

Le document US2012/114895 décrit un procédé de fabrication d'un élément isolant ainsi qu'un élément isolant correspondant.

### Objet de l'invention

Un objet de la présente invention est par conséquent de proposer des éléments d'isolation (et un procédé de fabrication), en particulier pour l'utilisation comme isolateur entre deux profilés de construction, qui bénéficient d'une solidité mécanique suffisante tout en permettant de réduire encore les déperditions thermiques par conduction.

### Description générale de l'invention

Afin de résoudre le problème mentionné ci-dessus, la présente invention propose, dans un premier aspect, un procédé de fabrication d'un isolateur selon l'objet de la revendication 1.

Il est bien connu qu'une mousse présente des propriétés d'isolation bien supérieure à celles du même matériau plein. Par contre, il est également bien connu que les mousses ne présentent pas une solidité/rigidité suffisante pour les applications nécessitant une certaine résistance mécanique. En l'occurrence, dans le domaine des isolateurs servant à réduire les ponts thermiques entre les éléments de construction connectés par ceux-ci, les mousses sont généralement trop flexibles et lors de l'assemblage se déforment facilement, notamment lors d'un clipsage ou lors du passage d'une vis de fixation au travers de la mousse.

Les inventeurs ont constaté de manière surprenante qu'il est possible d'obtenir un isolateur en mousse suffisamment rigide en prenant comme composant de base un ou plusieurs polymères thermoplastiques, en y ajoutant une certaine quantité de particules métalliques à faible émissivité, comme des poudres d'aluminium en lamelles, et en le densifiant localement par chauffage préalable. Contrairement à ce qui se passe en l'absence de ces particules métalliques, le réchauffement de la mousse pendant le chauffage n'a lieu qu'en surface probablement à cause d'une combinaison entre l'opacité des particules métalliques et leur faible émissivité, ce qui revient à une haute réflectivité de la composante infrarouge de la source de chaleur à proximité de la surface. La mousse ne se chauffant qu'en surface, la compression subséquente ne provoque un compactage ou une densification qu'en surface. L'isolateur conserve ainsi en grande partie les propriétés isolantes d'une mousse tout en présentant aux endroits utiles une rigidité mécanique suffisante.

Un avantage supplémentaire obtenu par ce procédé est que dans la couche superficielle les particules métalliques à faible émissivité, initialement orientées aléatoirement dans toutes les directions à l'intérieur de la mousse, se réorientent durablement parallèlement à la surface lors de la densification. Cette orientation est donc aussi parallèle à l'endroit de contact avec les éléments de construction et donc perpendiculaire au rayonnement calorifique émis par ceux-ci. La conséquence en est une réflectivité accrue aux endroits de contact avec les éléments de construction, augmentant encore les propriétés isolantes des isolateurs en mousse.

De plus, les isolateurs selon l'invention présentent l'avantage pratique sur le chantier de faciliter la pénétration de la pointe des vis de fixation entre les éléments de construction contrairement aux isolateurs réalisés en matière compacte rigide.

Il est à noter que dans le contexte de l'invention, l'isolateur lui-même est entièrement en mousse et est fait de préférence d'une pièce. Dans certains cas, notamment pour obtenir certaines sections géométriques plus complexes, il peut s'avérer utile ou nécessaire de le produire en plusieurs parties et d'assembler les parties, par exemple par collage ou similaire. Un tel isolateur peut néanmoins comprendre en plus des parties ou éléments accessoires susceptibles d'en améliorer certains aspects. Ces parties ou éléments accessoires peuvent faire partie intégrante (fait de la même matière) ou non de l'isolateur. En l'occurrence, il peut être utile de prévoir sur les côtés latéraux de l'isolateur des profilés supplémentaires, par exemple des ailettes, susceptibles de réduire la circulation d'air à l'intérieur de l'assemblage et ainsi réduire les déperditions de chaleur par convection.

La ou les régions densifiées de l'isolateur sont de préférence celles qui entrent en contact direct avec les éléments de construction. En général, un isolateur comprendra donc une ou deux régions densifiées aux extrémités. D'autres constellations sont cependant envisagées où l'isolateur comporte plus de deux régions densifiées.

La composition polymère utilisable dans le procédé comprend un ou plusieurs polymères de préférence sélectionné(s) parmi les polyoléfines, par exemple les polyéthylènes (PE), notamment de moyenne densité, de haute densité et/ou de ultra haut poids moléculaire (UHMWPE), les polypropylènes (PP), notamment les homopolymères PP ou les copolymères avec le PE (bloc, aléatoire, hétérophasique, ...), les polybutènes homopolymères ou copolymères, d'autres copolymères de l'éthylène et co-monomère (acétate de vinyle, acrylate de butyle, méthacrylate de méthyle, chlore, ...) ; les polystyrènes, par exemple le polystyrène homopolymère (« cristal ») ou les copolymères de styrène comme le polystyrène choc (high impact polystyrene, HIPS), l'acrylonitrile butadiène styrène (ABS) ou le styrène-acrylonitrile (SAN) ; les polyesters comme les polyesters aliphatiques, semi-aromatiques et aromatiques, par exemple le polyglycolide ou poly(acide glycolique) (PGA), le poly(acide lactique) (PLA), la polycaprolactone (PCL), le polyhydroxyalcanoate (PHA), le polyéthylène adipate (PEA), le polybutylène succinate (PBS), le polyéthylène téréphtalate (PET), le polybutylène téréphtalate (PBT), le polytriméthylène téréphtalate (PTT), le polyéthylène naphtalate (PEN), les copolymères élastomères de polyester (par exemple les polyester-éthers, les polybutylène téréphtalate-co-polytétraméthylène oxyde) ; les polycarbonates ; les cyclo-oléfines ; les polymétylméthacrylates (PMMA) ; les polyamides ; l'oxyde de polyphénylène (PPO) notamment en mélange avec un polystyrénique ; les polysulfones ; le chlorure de polyvinyle (PVC) ; les polycétones (PEEK) ; les acétals ; les polymères et copolymères fluorés (p. ex. PTFE) ; les polyimides ; ou leurs mélanges.

Parmi les polymères ci-dessus, les polyesters (seuls ou en mélange avec d'autres polymères) sont préférés et un polyester particulièrement préféré est le polyéthylène téréphtalate (PET). Pour certaines applications, il est avantageux que la teneur en polyester dans ces compositions soit supérieure à 60% en poids, de préférence supérieure à 75% en poids, de manière préférée supérieure à 80% en poids. Pour d'autres applications, la teneur peut néanmoins être plus faible, par exemple moins de 50% en poids, moins de 30% en poids ou même moins de 20% en poids.

Les agents moussants utilisables dans le contexte du procédé peuvent être des agents moussants physiques ou chimiques ou une combinaison de ces deux types. Des agents chimiques d'expansion (CBA) sont des agents moussants qui se décomposent sous l'effet d'une élévation de température. Ils se classent en deux familles : les CBA exothermiques, comme l'azodicarbonamide (ADCA), l'OxydiBenzeneSulfonyl Hydrazide (OBSH), ... qui se décomposent en produisant de la chaleur. L'azodicarbonamide se décompose vers 210°C, mais en présence d'un accélérateur de décomposition approprié, tel que l'oxyde de zinc et/ou le stéarate de zinc, la température de décomposition peut être abaissée d'environ 60°C. Les CBA endothermiques se décomposent en absorbant de la chaleur. Par exemple, l'acide citrique, le bicarbonate de soude et leurs mélanges se décomposent entre 150 et 230°C et produisent généralement moins de volume gazeux par gramme de CBA que les CBA exothermiques. Les agents moussants physiques tels que l'azote moléculaire, le dioxyde de carbone, les alcanes linéaires ou branchés en C1 à C4, se trouvent sous forme de gaz dans les conditions de température et de pression normales (0°C, 1 atmosphère); les pentanes (isopentane, néopentane, normal-pentane, cyclopentane), l'hexane, l'heptane sont quant à eux des liquides aux conditions normales. Ces gaz ou liquides sont solubles dans la masse polymère fondue à haute température et sous haute pression, et forment une seule phase dans les conditions adéquates de pression et de température. En dépressurisant le système monophasique, la nucléation et la croissance des bulles de gaz devenues insolubles génèrent une structure cellulaire. Le ou les agents moussants sont choisis de préférence parmi l'isobutane, le cyclopentane et/ou le dioxyde de carbone.

D'autres additifs peuvent généralement être utilisés, tels que des additifs nucléants (talc, stéarate de calcium, silice) qui facilitent la nucléation des bulles de la mousse et permettent de contrôler leur distribution, ou encore des agents chimiques utilisés pour accélérer la décomposition des agents moussants chimiques (voir ci-dessus), les agents anti-feu, les agents anti-UV, antioxydants, nucléateurs de cristallisation, ...

L'émissivité des particules métalliques, c'est-à-dire leur pouvoir d'émettre de l'énergie par rayonnement, est exprimée comme étant le rapport entre l'énergie rayonnée par un matériau et l'énergie rayonnée par un corps noir à la même température. Dans le cadre de l'invention, l'émissivité des particules métalliques est inférieure à 0,3, de manière davantage préférée inférieure à 0,2 et de manière tout particulièrement préférée inférieure à 0,15.

Les particules métalliques à faible émissivité utilisées dans le contexte de l'invention sont de préférence des plaquettes d'un diamètre médian en masse (D50) de 1 à 40 µm, de préférence de 3 à 30 µm, encore plus préféré de 5 à 25 µm, et sont de préférence constituées ou plaqués d'aluminium ou d'acier, de zinc, de bronze, ..., les plaquettes d'aluminium étant particulièrement préférées.

La quantité de particules métalliques à faible émissivité est situé entre 0.01 à 6% en poids de la composition totale. De préférence, la quantité sera située entre 0.2 et 4 % en poids, en particulier entre 0.5 et 2.5 % en poids.

Des densités de mousses appropriées se situent généralement dans un intervalle de 30 kg/m³ à 800 kg/m³, de préférence de 50 à 500 kg/m³, particulièrement préféré de 60 à 350 kg/m³.

Le chauffage peut être effectué par tout moyen approprié. De préférence il est effectué par soufflage d'air chaud et/ou par irradiation aux infra-rouges et/ou par lampes halogènes et/ou par micro-ondes.

Le chauffage se fait de préférence en sorte que la température en surface de la ou des région(s) chauffée(s) de l'isolateur brut se situe entre 70 et 400 °C, de préférence entre 150 et 300 °C. Dans la pratique, le chauffage est réglé de préférence de manière à dépasser, le cas échéant, la température de transition vitreuse du polymère. Pour les polymères semi-cristallins, la température de fusion est également un critère important, mais la quantité de cristallinité du polymère influencera la température à atteindre pour pouvoir déformer la pièce. Bien sûr, la géométrie (surface, épaisseur), la densité et la taille cellulaire de la mousse, l'ampleur de la compaction à réaliser, la force à appliquer et la géométrie finale des détails à atteindre conditionneront le choix de la température. La température appropriée peut souvent être repérée visuellement, lorsque la surface de la mousse change d'aspect, signe d'une fusion/ramollissement. L'homme de métier pourra facilement déterminer la température adéquate en fonction de la composition de la mousse moyennant quelques essais préalables. L'avantage de la présence des particules dans la mousse fait en sorte que la surface vient rapidement à température et limite ainsi la compaction en surface.

La densification locale en surface de la mousse est réalisée de préférence par compression sous l'effet d'un ou de plusieurs rouleaux et/ou par thermoformage dans un ou plusieurs moules et/ou par tirage à chaud, qui peuvent présenter différentes configurations ou aspects selon la forme souhaitée de la région densifié.

Il est à noter que l'isolateur brut peut être travaillé ou usiné avant et/ou après les étapes de chauffage/densification. En l'occurrence, si cela est souhaité ou nécessaire la mousse peut également être découpée et/ou fraisée, par exemple pour en affiner la forme.

Dans un autre aspect, l'invention concerne un isolateur obtenu selon le procédé décrit dans le présent document. En particulier, l'invention concerne un isolateur qui peut être placé entre deux éléments de construction tout en réduisant l'effet de pont thermique, l'isolateur étant en mousse polymère formée à partir d'une composition polymère comprenant un ou plusieurs polymère thermoplastiques, de préférence du polyéthylène téréphtalate, un ou plusieurs agents moussants et de 0.01 à 6% en poids de particules métalliques à faible émissivité. De plus, un tel isolateur comporte au moins une région densifiée en surface à chaud, c'est-à-dire de préférence tel que décrit en relation avec le procédé selon l'invention.

Dans un dernier aspect, l'invention envisage l'utilisation d'un isolateur tel que décrit dans ce document pour relier des profilés en plastiques, notamment en PVC, ou métalliques, notamment en acier, en aluminium, en cuivre, en laiton ou en un alliage métallique, en particulier pour des applications de menuiserie métallique dans le domaine du bâtiment. Une utilisation particulièrement avantageuse est l'utilisation des isolateurs selon l'invention entre les éléments de construction de (doubles, triples, ...) vitrages, de panneaux, de parements de façades, etc.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1 : est une coupe transversale schématique d'un mode de réalisation de l'isolateur selon l'invention.
Fig. 2 : est une coupe schématique d'un assemblage utilisant une forme de réalisation de l'isolateur selon l'invention.
Fig. 3 : est une photo d'un assemblage semblable à celui de la Fig. 2.
Fig. 4 : est une photo agrandie de la région superficielle densifiée selon l'invention.
Fig. 5 : est également une photo agrandie de la région superficielle densifiée selon l'invention montrant une échelle millimétrique.

### Description d'une exécution préférée

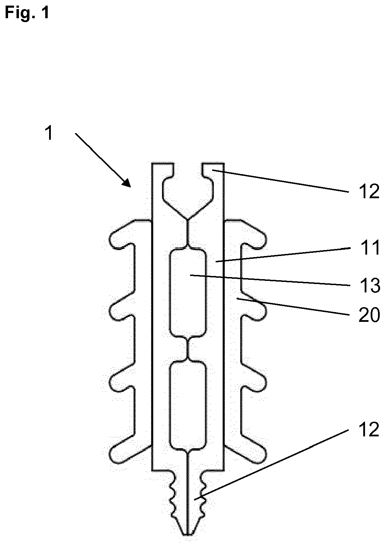

La Fig. 1 représente le schéma d'une coupe transversale d'un mode réalisation d'un isolateur 1 selon l'invention. D'une manière générale, l'isolateur selon l'invention peut être fait d'une pièce ou assemblé à partir de plusieurs pièces. Il peut en outre être creux ou plein. Dans le cas illustré, l'isolateur lui-même est creux (présente une cavité centrale) et est réalisé à partir de deux moitiés 11 à symétrie spéculaire assemblées, par exemple par collage. Une matière préférée est une mousse de PET. L'isolateur illustré comporte deux zones densifiées en surface 12 qui seront en contact avec les éléments de construction (non représentés). L'exemple représenté ici comporte une cavité 13 subdivisé en deux compartiments. La présence d'une cavité centrale dans l'isolateur facilite l'insertion des vis d'assemblages servant à solidariser les éléments de construction, alors que la compartimentation permet de réduire les déperditions de chaleur par convection à l'intérieur de l'isolateur. En variante, la cavité peut également être remplie d'un élément (p. ex. un profilé) en mousse de faible densité et très souple.

Dans l'exemple de la Fig. 1, l'isolateur comprend en outre des éléments accessoires 20 fixés latéralement sur le corps de l'isolateur 11. Ces éléments accessoires 20 peuvent être en un matériau différent de l'isolateur proprement-dit, de préférence ils sont cependant également en mousse, par exemple en PE.

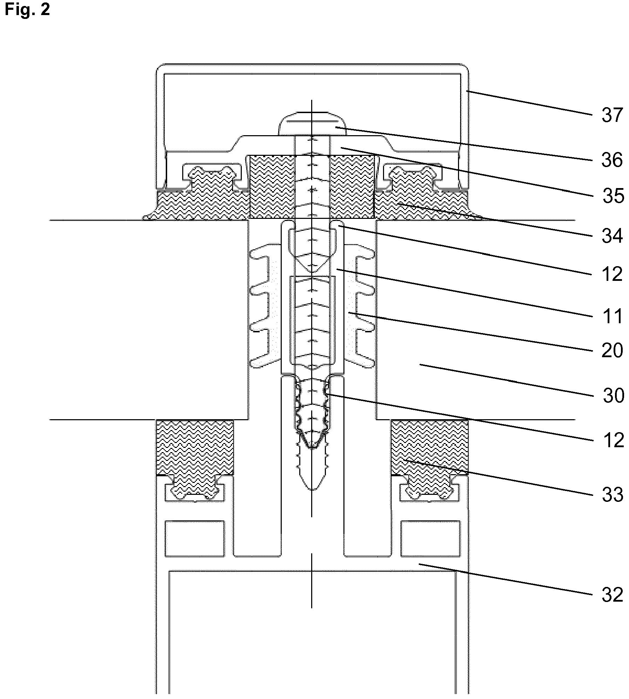

La Fig. 2 montre une coupe d'une construction utilisant un isolateur selon l'invention comprenant un corps d'isolateur 11 et des régions (extrémités) densifiés en surface. La vue montre la disposition comprenant un profilé de support 32 avec des joints inférieurs 33 sur lesquels sont déposés les vitrages ou panneaux 30. L'isolateur est introduit de manière à fixer une de ses extrémités à surface densifiée dans une rainure du profilé support 32 entre les panneaux ou vitrages 30. Une vis de fixation 36 traverse l'isolateur 1 et relie un profilé de façade 35 (qui peut être muni d'un cache 37) et des joints supérieurs 34 au profilé de support 32. Dans le cas illustré à la Fig. 2, les éléments accessoires forment des ailettes dont le bout s'appuiera de préférence contre les éléments de construction et compartimenteront donc également cet espace afin de réduire les déperditions par convection.

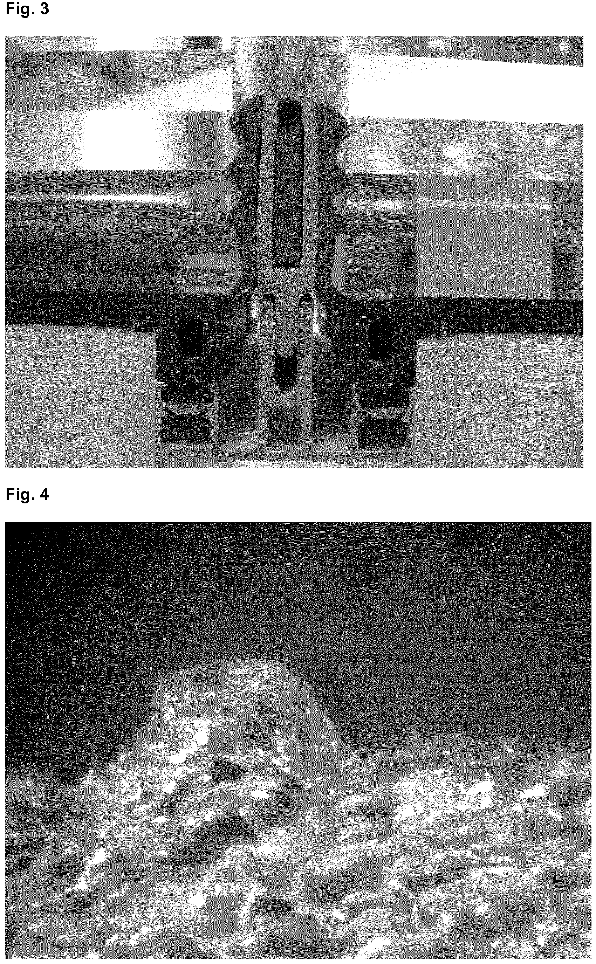

La Fig. 3 est une photo d'une construction semblable à celle de la Fig. 3 avant le montage du profilé de façade.

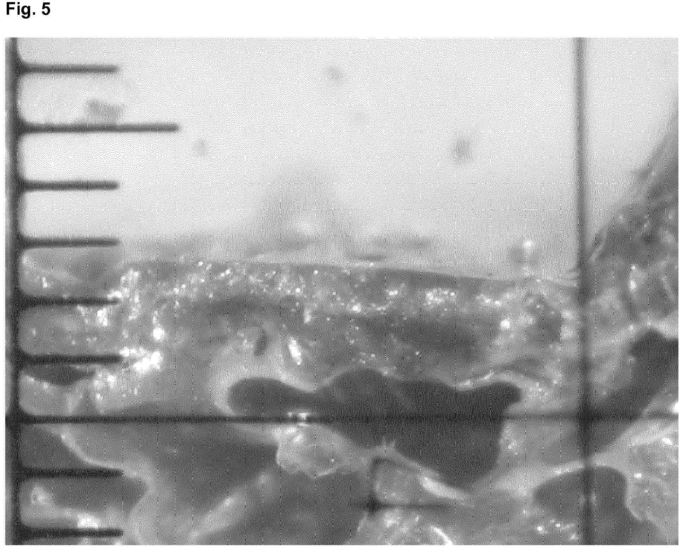

La Fig. 4 est une photo agrandie de la partie densifiée en surface (12 sur la Fig. 1) présentant une rigidité accrue et dans laquelle la majorité des particules métalliques à faible émissivité sont orientées de manière essentiellement parallèle à la surface. La Fig. 5 indique l'échelle millimétrique d'une partie de l'isolateur avec une épaisseur densifiée en surface d'environ 1 mm.

Exemples d'exécutions préférées pour l'obtention des mousses ayant des zones compactées en surface :
Exemple 1. On procède à l'extrusion en continu d'un profilé (isolateur) moussé de polymères, de gaz, d'additifs et de particules métalliques à faible émissivité ; on refroidit le profilé moussé afin d'obtenir une stabilité suffisante de la forme; on réchauffe une ou plusieurs parties de la surface extérieure de la mousse (lampes infrarouge, lampes halogènes, air chaud, micro-ondes,...) jusqu'à ce que les zones réchauffées soient devenues malléables (dépassement de la température de transition vitreuse et/ou de la température de fusion du polymère) ; on applique une déformation par pression sur la zone réchauffée, durant le temps nécessaire à ce que la déformation voulue soit atteinte, pour créer des zones compactées et on refroidit la zone déformée.
Exemple 2. On extrude en continu un profilé (isolateur) moussé de polymères, de gaz, d'additifs et de particules métalliques à faible émissivité ; on procède au tirage de la mousse encore suffisamment chaude pour être déformable à travers un dispositif de calibrage afin de créer une compaction de la surface extérieure sur une épaisseur choisie; on refroidit le profilé moussé afin d'obtenir une stabilité suffisante de la forme; on fraise la surface en diverses zones, jusqu'à éliminer l'épaisseur compactée, mettant à jour la mousse en surface.

**Duretés de surface :**

| **Échantillon** | **Description** | **densité (kg/m³)** | **dureté Shore A** |
|---|---|---|---|
| 1 | mousse 150 kg/m³, extrémité avec partie **compactée,** largeur découpée **5mm => sandwich couche compactée-mousse-couche compactée** | **240.1** | **70-72** |
| 2 | mousse 150 kg/m³, surface non compactée | **147.4** | **58-60** |

L'augmentation de densité et de dureté locales entrainent une rigidification locale du composite mousse aux parties compactées.

Grâce aux isolateurs selon l'invention les performances d'isolation thermique d'assemblages de construction classiques utilisant des profilés, notamment en matière plastique, en acier, en aluminium, en cuivre, en laiton ou en un alliage métallique, par exemple pour la connexion de profilés de construction de vitrages, de panneaux et de parements de façades, peuvent encore être améliorées.

### Légende:

- 1: Isolateur
- 11: Corps de l'isolateur
- 12: Parties densifiées en surface
- 13: Cavité(s)
- 20: Elément accessoire
- 30: Vitrage ou panneau
- 32: Profilé support
- 33: Joint inférieur
- 34: Joint supérieur
- 35: Profilé de façade
- 36: Vis de fixation
- 37: Cache

## Revendications

1. Procédé de fabrication d'un isolateur, en particulier pour réduire l'effet de pont thermique entre deux éléments de constructions connectés, le procédé comprenant les étapes de
a) moussage d'une composition polymère comprenant un ou plusieurs polymères thermoplastiques, un ou plusieurs agents moussants et de 0.01 à 6% en poids de particules métalliques à faible émissivité dont l'émissivité est inférieure à 0,3, de manière à former un isolateur brut,
b) chauffage d'une ou de plusieurs région(s) de l'isolateur brut,
c) densification locale en surface de la mousse de la ou des région(s) chauffée(s) de l'isolateur brut par application d'une pression pour former un isolateur à région(s) densifiée(s) en surface, et
d) refroidissement de l'isolateur résultant de l'étape c) à température ambiante.

2. Procédé selon la revendication 1, dans lequel le chauffage est effectué par soufflage d'air chaud et/ou par irradiation aux infra-rouges et/ou par lampes halogènes et/ou par micro-ondes.

3. Procédé selon la revendication 1 ou la revendication 2, dans lequel le ou les polymères thermoplastiques sont choisis parmi les polyoléfines, par exemple les polyéthylènes de moyenne densité, de haute densité et/ou de ultra haut poids moléculaire, les polypropylènes, par exemple les homopolymères polypropylène ou les copolymères avec le polyéthylène, les polybutènes homopolymères ou copolymères, d'autres copolymères de l'éthylène et d'un co-monomère choisi parmi l'acétate de vinyle, l'acrylate de butyle, le méthacrylate de méthyle et/ou le chlore ; les polystyrènes, par exemple le polystyrène homopolymère ou les copolymères de styrène comme le polystyrène choc, l'acrylonitrile butadiène styrène ou le styrène-acrylonitrile ; les polyesters comme les polyesters aliphatiques, semi-aromatiques et aromatiques, par exemple le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, les copolymères élastomères de polyester, par exemple les polyester-éthers, les polybutylène téréphtalate-co-polytétraméthylène oxyde ; les polycarbonates ; les cyclo-oléfines ; les polymétylméthacrylates ; les polyamides ; l'oxyde de polyphénylène notamment en mélange avec un polystyrénique ; les polysulfones ; le chlorure de polyvinyle ; les polycétones ; les acétals ; les polymères et copolymères fluorés ; les polyimides ; ou leurs mélanges.

4. Procédé selon la revendication 3, dans lequel le ou au moins un des polymères thermoplastiques est/sont choisi(s) parmi les polyesters, de préférence le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, de manière particulièrement préféré le polyéthylène téréphtalate.

5. Procédé selon la revendication 4, dans lequel la teneur en polyester dans ces compositions est supérieure à 60% en poids, de préférence supérieure à 75% en poids, de manière particulièrement préférée supérieure à 80% en poids.

6. Procédé selon l'une quelconque des revendications 1 à 5, dans lequel la température en surface de la ou des région(s) chauffée(s) de l'isolateur brut se situe entre 70 et 400 °C, de préférence entre 150 et 300 °C.

7. Procédé selon l'une quelconque des revendications 1 à 6, dans lequel la densification locale en surface de la mousse est réalisée par compression sous l'effet d'un rouleau et/ou par thermoformage dans un moule.

8. Procédé selon l'une quelconque des revendications 1 à 7, dans lequel le ou les agents moussants sont choisis parmi l'isobutane, le cyclopentane et/ou le dioxyde de carbone.

9. Procédé selon l'une quelconque des revendications 1 à 8, dans lequel la composition polymère comprend d'autres additifs, tels que des additifs nucléants comme le talc, le stéarate de calcium ou la silice, des agents chimiques accélérant la décomposition des agents moussants chimiques comme l'oxyde de zinc et/ou le stéarate de zinc, des agents anti-feu, des agents anti-UV, des antioxydants et/ou des nucléateurs de cristallisation.

10. Procédé selon l'une quelconque des revendications 1 à 9, dans lequel l'émissivité des particules métalliques est inférieure à 0,2, de préférence inférieure à 0,15.

11. Procédé selon l'une quelconque des revendications 1 à 10, dans lequel les particules métalliques à faible émissivité sont constituées ou plaqués d'aluminium ou d'acier, de zinc et/ou de bronze et présentent de préférence un diamètre médian en masse (D50) de 1 à 40 µm, de préférence de 3 à 30 µm, de manière davantage préférée de 5 à 25 µm ; les plaquettes d'aluminium étant particulièrement préférées.

12. Procédé selon l'une quelconque des revendications 1 à 11, dans lequel la quantité de particules métalliques à faible émissivité est situé 0.2 et 4 % en poids, en particulier entre 0.5 et 2.5 % en poids de la composition totale.

13. Isolateur fabriqué par un procédé selon la revendication 1 et pouvant être placé entre deux éléments de construction réduisant l'effet de pont thermique, **caractérisé en ce que** l'isolateur est en mousse polymère obtenu par moussage d'une composition polymère comprenant un ou plusieurs polymères thermoplastiques, un ou plusieurs agents moussants et de 0.01 à 6% en poids de particules métalliques à faible émissivité dont l'émissivité est inférieure à 0,3 et **en ce qu'**il comporte au moins une région densifiée en surface par chauffage local et compaction en surface.

14. Isolateur selon la revendication 13, dans lequel le ou les polymères thermoplastiques sont choisis parmi les polyoléfines, par exemple les polyéthylènes de moyenne densité, de haute densité et/ou de ultra haut poids moléculaire, les polypropylènes, par exemple les homopolymères polypropylène ou les copolymères avec le polyéthylène, les polybutènes homopolymères ou copolymères, d'autres copolymères de l'éthylène et d'un co-monomère choisi parmi l'acétate de vinyle, l'acrylate de butyle, le méthacrylate de méthyle et/ou le chlore ; les polystyrènes, par exemple le polystyrène homopolymère ou les copolymères de styrène comme le polystyrène choc, l'acrylonitrile butadiène styrène ou le styrène-acrylonitrile ; les polyesters comme les polyesters aliphatiques, semi-aromatiques et aromatiques, par exemple le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, les copolymères élastomères de polyester, par exemple les polyester-éthers, les polybutylène téréphtalate-co-polytétraméthylène oxyde ; les polycarbonates ; les cyclo-oléfines ; les polymétylméthacrylates ; les polyamides ; l'oxyde de polyphénylène notamment en mélange avec un polystyrénique ; les polysulfones ; le chlorure de polyvinyle ; les polycétones ; les acétals ; les polymères et copolymères fluorés ; les polyimides ; ou leurs mélanges, de préférence le ou au moins un des polymères thermoplastiques est/sont choisi(s) parmi les polyesters, de préférence le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, de manière particulièrement préféré le polyéthylène téréphtalate.

15. Utilisation d'un isolateur selon l'une quelconque des revendications 13 ou 14 ou d'un isolateur obtenu par le procédé selon l'une quelconque des revendications 1 à 12 pour isoler sans pont thermique des profilés de construction, notamment en matière plastique, en acier, en aluminium, en cuivre, en laiton ou en un alliage métallique, en particulier pour des applications de menuiserie métallique dans le domaine du bâtiment, de préférence pour l'isolation de la connexion de profilés de construction de vitrages, de panneaux et de parements de façades.

## Patentansprüche

1. Verfahren zur Herstellung einer Isoliervorrichtung, um insbesondere die Wärmebrückenwirkung zwischen zwei miteinander verbundenen Bauelementen zu verringern, wobei das Verfahren die folgenden Schritte umfasst
a) Aufschäumen einer Polymerzusammensetzung, die ein oder mehrere thermoplastische Polymere, ein oder mehrere Treibmittel sowie 0,01 bis 6 Gewichts-% an Metallpartikeln mit geringem Emissionsgrad umfasst, deren Emissionsgrad geringer als 0,3 ist, um eine Rohisoliervorrichtung zu bilden,
b) Erhitzen eines oder mehrerer Bereiche(s) der Rohisoliervorrichtung,
c) örtlich begrenztes oberflächliches Verdichten des Schaumstoffs des oder der erhitzten Bereiche(s) der Rohisoliervorrichtung, indem ein Druck zur Anwendung gebracht wird, um eine Isoliervorrichtung mit oberflächlich verdichtetem/verdichteten Bereich(en) zu bilden, und
d) Abkühlen der Isoliervorrichtung, die in Schritt c) erhalten wurde, auf Raumtemperatur.

2. Verfahren nach Anspruch 1, wobei das Erhitzen durch ein Heißluftgebläse und/oder durch Infrarotbestrahlung und/oder durch Halogenlampen und/oder durch Mikrowellen bewirkt wird.

3. Verfahren nach Anspruch 1 oder Anspruch 2, wobei das oder die thermoplastischen Polymere aus den Polyolefinen, beispielsweise den Polyethylenen mittlerer Dichte, hoher Dichte und/oder mit ultrahohem Molekulargewicht, den Polypropylenen, beispielsweise den Polypropylen-Homopolymeren oder den Copolymeren mit Polyethylen, den Homopolymeren oder Copolymeren des Polybutens, den sonstigen Copolymeren des Ethylens und eines Comonomers, welches aus Vinylacetat, Butylacrylat, Methylmethacrylat und/oder Chlor ausgewählt ist; den Polystyrolen, beispielsweise Polystyrol-Homopolymer oder den Copolymeren des Styrols wie etwa hochschlagfestem Polystyrol, Acrylnitril-Butadien-Styrol oder Styrol-Acrylnitril; den Polyestern wie den aliphatischen, halbaromatischen und aromatischen Polyestern, beispielsweise Polyglycolid oder Polyglycolsäure, Polymilchsäure, Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat, den elastomeren Polyester-Copolymeren, beispielsweise den Polyesterethern, den Polybutylenterephthalat-co-polytetramethylenoxiden; den Polycarbonaten; den Cycloolefinen; den Polymethylmethacrylaten; den Polyamiden; Polyphenylenoxid insbesondere im Gemisch mit einer polystyrolartigen Verbindung; den Polysulfonen; Polyvinylchlorid; den Polyketonen; den Acetalen; den fluorhaltigen Polymeren und Copolymeren; den Polyimiden; oder deren Mischungen ausgewählt sind.

4. Verfahren nach Anspruch 3, wobei das oder mindestens eines der thermoplastischen Polymere aus den Polyestern, vorzugsweise aus Polyglycolid oder Polyglycolsäure, Polymilchsäure, Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat ausgewählt ist/sind, wobei es sich mit besonderem Vorzug um Polyethylenterephthalat handelt.

5. Verfahren nach Anspruch 4, wobei der Gehalt an Polyester in diesen Zusammensetzungen mehr als 60 Gewichts-%, vorzugsweise mehr als 75 Gewichts-%, mit besonderem Vorzug mehr als 80 Gewichts-% beträgt.

6. Verfahren nach einem beliebigen der Ansprüche 1 bis 5, wobei die oberflächliche Temperatur des oder der erhitzten Bereiche(s) der Rohisoliervorrichtung zwischen 70 und 400 °C, vorzugsweise zwischen 150 und 300 °C, liegt.

7. Verfahren nach einem beliebigen der Ansprüche 1 bis 6, wobei die örtlich begrenzte oberflächliche Verdichtung des Schaumstoffs durch Kompression unter Einwirkung einer Rolle und/oder durch Thermoformung in einer Form erfolgt.

8. Verfahren nach einem beliebigen der Ansprüche 1 bis 7, wobei das oder die Treibmittel aus Isobutan, Cyclopentan und/oder Kohlendioxid ausgewählt sind.

9. Verfahren nach einem beliebigen der Ansprüche 1 bis 8, wobei die Polymerzusammensetzung weitere Zusatzstoffe wie etwa nukleierend wirkende Zusatzstoffe wie Talkum, Calciumstearat oder Siliciumdioxid, Chemikalien zur Beschleunigung der Zersetzung der chemischen Treibmittel, wie Zinkoxid und/oder Zinkstearat, Flammschutzmittel, UV-Filter, Antioxidantien und/oder kristallisationsfördernde Nukleierungsmittel umfasst.

10. Verfahren nach einem beliebigen der Ansprüche 1 bis 9, wobei der Emissionsgrad der Metallpartikel weniger als 0,2, vorzugsweise weniger als 0,15, beträgt.

11. Verfahren nach einem beliebigen der Ansprüche 1 bis 10, wobei die Metallpartikel mit geringem Emissionsgrad aus Aluminium oder Stahl, aus Zink und/oder aus Bronze bestehen oder damit überzogen sind, wobei sie vorzugsweise einen massenbezogenen Medianwert des Durchmessers (D50) von 1 bis 40 µm, vorzugsweise von 3 bis 30 µm, auf noch stärker bevorzugte Weise von 5 bis 25 µm aufweisen; wobei Aluminiumplättchen besonders bevorzugt sind.

12. Verfahren nach einem beliebigen der Ansprüche 1 bis 11, wobei die Menge an Metallpartikeln mit geringem Emissionsgrad 0,2 bis 4 Gewichts-%, insbesondere 0,5 bis 2,5 Gewichts-%, der Zusammensetzung insgesamt ausmacht.

13. Isoliervorrichtung, die mittels eines Verfahrens nach Anspruch 1 hergestellt wurde und zwischen zwei Bauelementen angeordnet werden kann, wobei sie die Wärmebrückenwirkung verringert, **dadurch gekennzeichnet, dass** die Isoliervorrichtung aus einem Polymerschaumstoff besteht, welcher durch Aufschäumen einer Polymerzusammensetzung erhalten wurde, die ein oder mehrere thermoplastische Polymere, ein oder mehrere Treibmittel sowie 0,01 bis 6 Gewichts-% an Metallpartikeln mit geringem Emissionsgrad umfasst, deren Emissionsgrad geringer als 0,3 ist, und dadurch, dass sie mindestens einen durch örtlich begrenztes Erhitzen und oberflächliche Volumenverringerung oberflächlich verdichteten Bereich umfasst.

14. Isoliervorrichtung nach Anspruch 13, wobei das oder die thermoplastischen Polymere aus den Polyolefinen, beispielsweise den Polyethylenen mittlerer Dichte, hoher Dichte und/oder mit ultrahohem Molekulargewicht, den Polypropylenen, beispielsweise den Polypropylen-Homopolymeren oder den Copolymeren mit Polyethylen, den Homopolymeren oder Copolymeren des Polybutens, den sonstigen Copolymeren des Ethylens und eines Comonomers, welches aus Vinylacetat, Butylacrylat, Methylmethacrylat und/oder Chlor ausgewählt ist; den Polystyrolen, beispielsweise Polystyrol-Homopolymer oder den Copolymeren des Styrols wie etwa hochschlagfestem Polystyrol, Acrylnitril-Butadien-Styrol oder Styrol-Acrylnitril; den Polyestern wie den aliphatischen, halbaromatischen und aromatischen Polyestern, beispielsweise Polyglycolid oder Polyglycolsäure, Polymilchsäure, Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat, den elastomeren Polyester-Copolymeren, beispielsweise den Polyesterethern, den Polybutylenterephthalat-co-polytetramethylenoxiden; den Polycarbonaten; den Cycloolefinen; den Polymethylmethacrylaten; den Polyamiden; Polyphenylenoxid insbesondere im Gemisch mit einer polystyrolartigen Verbindung; den Polysulfonen; Polyvinylchlorid; den Polyketonen; den Acetalen; den fluorhaltigen Polymeren und Copolymeren; den Polyimiden; oder deren Mischungen ausgewählt sind; wobei das oder die thermoplastische Polymere vorzugsweise aus den Polyestern, vorzugsweise aus Polyglycolid oder Polyglycolsäure, Polymilchsäure, Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat ausgewählt ist/sind, wobei es sich mit besonderem Vorzug um Polyethylenterephthalat handelt.

15. Verwendung einer Isoliervorrichtung nach einem beliebigen der Ansprüche 13 oder 14 oder einer Isoliervorrichtung, die mittels des Verfahrens nach einem beliebigen der Ansprüche 1 bis 12 erhalten wurde, um Bauprofile, die insbesondere aus Kunststoff, aus Stahl, aus Aluminium, aus Kupfer, aus Messing oder aus einer Metalllegierung bestehen, ohne Wärmebrücke zu isolieren, vorzugsweise für Metallbauanwendungen in der Baubranche, vorzugsweise um die Verbindung von Profilteilen zum Bau von Verglasungen, Paneelen und Fassadenverkleidungen zu isolieren.

## Claims

1. Method for manufacturing an insulator, in particular for reducing thermal bridging between two connected construction elements, the method comprising the steps of
a) foaming a polymer composition comprising one or more thermoplastic polymers, one or more foaming agents and 0.01 to 6% by weight of low-emissivity metal particles, the emissivity of which is less than 0.3, so as to form a raw insulator,
b) heating one or more region(s) of the raw insulator,
c) locally densifying the surface of the foam of the heated region(s) of the raw insulator by application of pressure to form an insulator with surface-densified region(s), and
d) cooling the insulator resulting from step c) to ambient temperature.

2. Method according to claim 1, in which heating is carried out by blowing hot air and/or by infra-red irradiation and/or by halogen lamps and/or by microwaves.

3. Method according to claim 1 or claim 2, in which the thermoplastic polymer(s) is/are selected from polyolefins, for example medium density, high density and/or ultra high molecular weight polyethylenes, polypropylenes, for example polypropylene homopolymers or copolymers with polyethylene, homopolymeric or copolymeric polybutenes, other copolymers of ethylene and a comonomer selected from vinyl acetate, butyl acrylate, methyl methacrylate and/or chlorine; polystyrenes, for example homopolymeric polystyrene or styrene copolymers such as high-impact polystyrene, acrylonitrile-butadiene-styrene or styreneacrylonitrile; polyesters such as aliphatic, semi-aromatic and aromatic polyesters, for example polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, elastomeric copolymers of polyester, for example polyester-ethers, polybutylene terephthalate-co-polytetramethylene oxides; polycarbonates; cycloolefins; polymethyl methacrylates; polyamides; polyphenylene oxide in particular blended with a polystyrenic resin; polysulfones; polyvinyl chloride; polyketones; acetals; fluorinated polymers and copolymers; polyimides; or mixtures thereof.

4. Method according to claim 3, in which the or at least one of the thermoplastic polymers is/are selected from polyesters, preferably polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, and particularly preferably polyethylene terephthalate.

5. Method according to claim 4, in which the content of polyester in these compositions is greater than 60% by weight, preferably greater than 75% by weight, particularly preferably greater than 80% by weight.

6. Method according to any one of claims 1 to 5, in which the temperature at the surface of the heated region(s) of the raw insulator ranges between 70 and 400 °C, preferably between 150 and 300 °C.

7. Method according to any one of claims 1 to 6, in which the local surface densification of the foam is performed by compression under the action of a roller and/or by thermoforming in a mould.

8. Method according to any one of claims 1 to 7, in which the foaming agent(s) is/are selected from isobutane, cyclopentane and/or carbon dioxide.

9. Method according to any one of claims 1 to 8, in which the polymer composition comprises other additives, such as nucleating additives such as talcum, calcium stearate or silica, chemical agents which accelerate the decomposition of the chemical foaming agents such as zinc oxide and/or zinc stearate, fire-retardant agents, UV-stabilisers, antioxidants and/or crystal nucleating agents.

10. Method according to any one of claims 1 to 9, in which the emissivity of the metal particles is less than 0.2, preferably less than 0.15.

11. Method according to any one of claims 1 to 10, in which the low-emissivity metal particles are composed of or plated with aluminium or steel, zinc and/or bronze and preferably have a mass-median diameter (D50) of 1 to 40 µm, preferably of 3 to 30 µm, more preferably of 5 to 25 µm, aluminium chips being particularly preferred.

12. Method according to any one of claims 1 to 11, in which the quantity of low-emissivity metal particles is between 0.2 and 4% by weight, in particular between 0.5 and 2.5% by weight of the total composition.

13. Insulator manufactured by a method according to claim 1 which may be placed between two construction elements to reduce thermal bridging, **characterised in that** the insulator is a polymer foam obtained by foaming a polymer composition comprising one or more thermoplastic polymers, one or more foaming agents and from 0.01 to 6% by weight of low-emissivity metal particles, the emissivity of which is less than 0.3, and **in that** said insulator comprises at least one region which is densified at the surface by local heating and surface compaction.

14. Insulator according to claim 13, in which the thermoplastic polymer(s) is/are selected from polyolefins, for example medium density, high density and/or ultra high molecular weight polyethylenes, polypropylenes, for example polypropylene homopolymers or copolymers with polyethylene, homopolymeric or copolymeric polybutenes, other copolymers of ethylene and a comonomer selected from vinyl acetate, butyl acrylate, methyl methacrylate and/or chlorine; polystyrenes, for example homopolymeric polystyrene or styrene copolymers such as high-impact polystyrene, acrylonitrile-butadiene-styrene or styreneacrylonitrile; polyesters such as aliphatic, semi-aromatic and aromatic polyesters, for example polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, elastomeric copolymers of polyester, for example polyester-ethers, polybutylene terephthalate-co-polytetramethylene oxides; polycarbonates; cycloolefins; polymethyl methacrylates; polyamides; polyphenylene oxide in particular blended with a polystyrenic resin; polysulfones; polyvinyl chloride; polyketones; acetals; fluorinated polymers and copolymers; polyimides; or mixtures thereof, the or at least one of the thermoplastic polymers preferably being selected from polyesters, preferably polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, and particularly preferably polyethylene terephthalate.

15. Use of an insulator according to any one of claims 13 or 14 or an insulator obtained by the method according to any one of claims 1 to 12 for insulation without thermal bridging of construction profiles, in particular made of plastics material, steel, aluminium, copper, brass or a metal alloy, in particular for metal joinery applications in the building sector, preferably for insulating joints in construction profiles for glazing, panels and façade cladding.
